# EUROPEAN PATENT APPLICATION

(11) **EP 4 686 710 A1**
(43) Date of publication of application: **04.02.2026**
(21) Application number: 24191674.1
(22) Date of filing: 30.07.2024
(51) Int. Cl.: C04B 20/06, C04B 28/14, C04B 28/16

(54) **A DRY GYPSUM PLASTER COMPOSITION**

(71) Applicant: SAINT-GOBAIN PLACO, 92400 Courbevoie (FR)
(72) Inventor: SEVERN, Heather, East Leake (GB); RUIZ SALAS, Carlos, 28002 MADRID (ES); RIDDLE, Carl, EAST LEAKE (GB); GATER, Jenny, EAST LEAKE (GB)
(74) Representative: Saint-Gobain Recherche

(57) **Abstract**

The invention relates to a dry gypsum plaster composition comprising 30-95wt% of calcium sulfate hemihydrate and 1-30wt% of expanded aluminosilicate particles that have been expanded by irradiating raw aluminosilicate particles by means of a radiation having at least one wavelength in the range of 800 to 2000 nm.

## Description

The invention relates to a dry gypsum plaster composition. A dry gypsum plaster composition is a powder mixture based on calcium sulfate hemihydrate. After mixing with water, it forms a paste, called wet plaster, that can be applied by hand or machine on various substrates before setting and hardening, usually to form a plaster coat. Gypsum plasters can for example be used for creating smooth, level surfaces, bedding tapes, filling and finishing drywall joints, or achieving a uniform base for dot-and-dabbing plasterboard linings, or as adhesive plasters.

Gypsum plaster compositions may comprise lightweight aggregates. Lightweight aggregates are aggregates having a bulk density of 700 g/L and less, especially of 500 g/L and less. The bulk density of aggregates may be measured according to EN 1097-3 :1998 standard. Lightweight aggregates improve the workability of the wet plaster and increase the yield, i.e. the amount of dry powder needed to cover, once mixed with water, a given surface at a given thickness. Such lightweight aggregates may also, in some ranges of products, impart thermal insulation and/or acoustical correction.

Examples of known lightweight aggregates include expanded perlite and expanded glass beads (for example Poraver^{®}). Expanded perlite is usually obtained by heat treating perlite, which is an amorphous volcanic aluminosilicate. Heat treatment of perlite ores, achieved by direct flame impingement, electrical resistance heating, or gas combustion, can significantly increase the volume of particles, up to twenty times their original size, resulting in a low-density material.

The inventors have surprisingly found that other ways of expanding aluminosilicates make it possible to improve mechanical properties of the plaster, especially its compressive and flexural strengths.

To this end, an object of the invention is a dry gypsum plaster composition as defined in Claim 1.

In the present specification, the contents of the dry gypsum plaster compositions' constituents are expressed as percentages by weight of the total weight of the dry gypsum plaster composition. The dry gypsum plaster composition may be referred to as "the dry composition" or "the plaster composition" in the specification.

In the present text, the term "raw particles" designates the particles before expansion while the term "expanded particles" designates the particles after expansion by irradiating raw aluminosilicate particles by means of a radiation having at least one wavelength in the range of 800 to 2000 nm.

Without being bound by a scientific theory, it seems that the production of expanded aluminosilicate particles using an irradiation in the near-infrared (NIR) range instead of flames or other conventional means of heating makes it possible to obtain particles having a different microstructure, which explains the surprising results in terms of properties of the final plasters that will be described in greater detail later in the text. The difference of microstructure is however difficult to define precisely and accurately. Microscope observations have shown that the surface of the particles presents less apparent pores, even though the particles are still porous.

The chemical composition of aluminosilicate particles (raw and/or expanded) preferably comprises at least 50wt%, especially at least 60wt%, of SiO₂+Al₂O₃. The chemical composition may also contain other oxides such as MgO, Fe₂O₃, CaO, K₂O and TiO₂. The raw aluminosilicate particles preferably contain combined water, especially in an amount of 1-20wt%, preferably 2-15wt%, even 2-6wt%. The raw aluminosilicate particles preferably have an amorphous, or glassy, structure. They are preferably obtained by crushing volcanic rocks.

Preferred aluminosilicates are perlite and vermiculite. Preferably, the expanded aluminosilicate particles are therefore particles of expanded perlite or particles of expanded vermiculite. Before expansion, the amount of combined water in perlite is preferably 2-6wt%, and the amount of water in vermiculite is preferably 8-16wt%. Perlite is particularly preferred.

The expanded aluminosilicate particles preferably have a water uptake of less than 200%, especially between 100 and 180%, or between 120 and 170%. Such a low water uptake is believed to reflect the different microstructure mentioned before. In comparison, perlite that has been expanded by gas heating show water uptakes above 200%, usually above 400%, and even often above 500%. The water uptake is especially measured after 15 minutes of absorption. The water uptake is for example measured by placing the particles in excess water at room temperature, allowing the particles to absorb water for 15 minutes, draining off the excess water and comparing the weight of particles before and after absorption. The water uptake is defined as the relative increase in weight. Therefore, a further object of the invention is a dry gypsum plaster composition comprising 30-95wt% of calcium sulfate hemihydrate and 1-30wt% of expanded aluminosilicate particles having a water uptake of less than 200%, especially between 100 and 180%, the amount of said expanded aluminosilicate particles being 1-30wt% with respect to the weight of dry plaster composition. The particles are preferably uncoated.

The radiation preferably has at least one wavelength in the range of 800 to 1500 nm. The irradiation is preferably made by lamps emitting (at least partially) in the NIR range, for example halogen lamps. These lamps show a broad spectrum that encompasses not only the NIR range, but also part of the UV and visible ranges.

The best results are obtained using a short and powerful irradiation, i.e. with a high power density. Preferably, the radiation has a power density of at least 50 kW/m², especially of at least 200 kW/m², even of at least 500 kW/m². The duration of irradiation for each aluminosilicate particle is preferably 0.5 to 20 seconds, even 1 to 5 seconds. The temperature of the particles during irradiation is preferably 800 to 1200°C. The irradiation is preferably a continuous process, and especially includes conveying a bed of particles (for example 2 to 20 mm thick) under and/or over a lamp or a series of lamps (especially halogen lamps).

The bulk density of the expanded aluminosilicate particles is preferably 40-500 g/L, especially 50-350 g/L, even 100-250 g/L. The bulk density may be measured according to EN 1097-3 :1998 standard.

The expanded aluminosilicate particles preferably have a particle size distribution in volume such that the D50 is 0.010-0.50 mm and the D90 is 0.050-3.0 mm. The particle size distribution may be determined by laser diffraction.

According to one preferred embodiment, the D50 is preferably 0.010-0.050 mm and the D90 is preferably 0.050-0.100 mm. This is particularly preferred for finishing, smoothing or jointing plasters. According to another embodiment, the D50 is preferably 0.050-0.20 mm and the D90 is preferably 0.100-2.0 mm. This is particularly preferred for leveling plasters or undercoat plasters.

The amount of calcium sulfate hemihydrate is preferably 40-90wt%, especially 50-90wt%, even 60-90wt% or 61-85wt% or 65-80wt%, with respect to the amount of dry plaster composition. The amount of calcium sulfate hemihydrate is preferably more than 60wt%, especially at least 61%, or at least 62wt%, even at least 65wt%, with respect to the amount of dry plaster composition. The amount of expanded aluminosilicate particles is preferably 1-25wt%, especially 1-20wt%, even 2-15wt%.

The gypsum plaster composition may also comprise fillers, especially selected from calcite, dolomite, anhydrite and their mixtures. The maximum size of the fillers is preferably 2 mm or less. For a smoothing or jointing plaster, the maximum size of the fillers is preferably 0.015 mm or less. Calcite and dolomite are inert fillers while anhydrite shows some reactivity. Anhydrite may be natural and/or calcined. The total amount of fillers is preferably 0-70wt%, especially 5-60wt% or 10-50wt%. More specifically, the total amount of inert fillers is preferably 0-70wt%, and the total amount of anhydrite is preferably 0-50wt%. The gypsum plaster may also comprise ground granulated blast furnace slag ("slag"). The amount of slag is preferably 0-25wt%, especially 5-20wt%. Slags make it possible to improve the mechanical strength of the plaster.

The gypsum plaster composition preferably comprises one or more additive chosen from redispersable polymer powders, accelerators, retarders, rheological modifiers, air entrainers, pH modifiers, water-retention agents, pigments, stabilizers, thickeners, shrinkage-reducing agents, hydrophobic agents, plasticizers, and superplasticizers. The total amount of such additives is preferably 0.1 to 20.0wt%, especially 0.5 to 5.0wt% with respect to the amount of dry plaster composition.

pH modifiers are preferably selected from lime and cement (especially Portland cement). The amount of lime and/or cement is preferably 0-10wt% with respect to the amount of dry plaster composition.

Accelerators are for example alkali sulfates or alkali carbonates, or micronized gypsum. The total amount of accelerators with respect to the amount of dry composition is preferably 0.001 to 0.50wt%, especially 0.005 to 0.30%. Retarders are for example carboxylic acids such as tartaric or citric acids or their salts, or protein-based retarders. The total amount of retarders is preferably 0.001 to 0.60wt% with respect to the amount of dry composition.

Thickeners are for example chosen from starch ethers, polyacrylamide, clays (such as for example hectorite, bentonite or attapulgite), xanthan gum, polyurethane, and mixtures thereof. The total amount of thickeners is preferably 0.01-5.0wt%, especially 0.02-1.0wt%.

Water-retention agents are for example cellulose ethers. Their total amount is preferably 0.05 to 0.5wt%, especially 0.1 to 2wt% with respect to the amount of dry composition. These additives make it possible to improve the workability of the wet plaster. Cellulose ether is for example hydroxypropyl methyl cellulose or hydroxyethyl methyl cellulose.

The redispersable polymer powder is preferably chosen from vinyl acetate polymers or styrene polymers. The amount of redispersable polymer powder is preferably 0.2 to 8.0wt%, especially 0.5 to 6.0wt%, with respect to the amount of dry composition.

Another subject of the invention is a method for obtaining a plaster coat comprising mixing the gypsum plaster composition according to the invention with water to obtain a wet plaster, applying said wet plaster to a substrate, and letting the wet plaster set and dry.

The ratio of water to the dry composition ("water ratio") preferably ranges from 0.2 to 1.0 by weight, in order to get the right consistency for the wet plaster. This corresponds to a water dosage of 20 to 100% (added to 100% of dry plaster).

The substrate may be a masonry surface (for example made of clay bricks, concrete blocks, concrete walls), a gypsum board, a cement board, an existing plaster, wood, metal, or a painted surface. The substrate can be part of a wall or a ceiling. The plaster may especially be a leveling plaster, a smoothing or skimming plaster, an adhesive plaster or a jointing plaster. Leveling plasters are used to create a flat and even surface over uneven substrates, and are applied as a thick coat, for example 5-25 mm. A smoothing plaster, on the other hand, is applied as a thin coat (for example less than 5 or 3 mm) to create a final smooth surface for painting, wallpapering or other decorative finishes. A jointing plaster is used to fill and smooth the joints between plasterboard sheets. The coat may be applied manually, using for example a trowel, or by a projection machine.

In a preferred embodiment, the plaster composition preferably comprises 50-95wt% calcium sulfate hemihydrate, 1-30wt% expanded aluminosilicate particles and 0-50wt% fillers. This is particularly preferred for levelling plasters.

In another preferred embodiment, the plaster composition preferably comprises 30-90wt% calcium sulfate hemihydrate, 10-60wt% fillers and 1-15wt% expanded aluminosilicate particles. This is particularly preferred for smoothing and jointing plasters.

### Figures

[Fig.1] displays a scanning electron microscope (SEM) image of traditional perlite particles, expanded by gas heating.
[Fig.2] displays an SEM image of perlite particles obtained by NIR irradiation (irradiation by tungsten halogen lamps) of the same perlite ore. These particles are used in the inventive examples described in the present description.

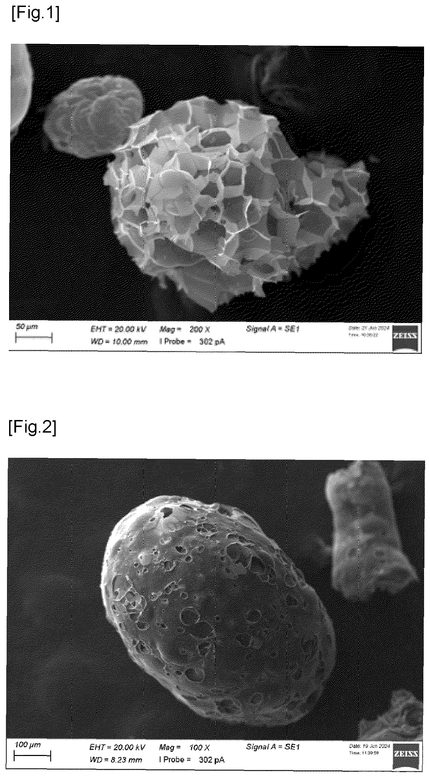

Figures 1 and 2 illustrate the difference in terms of microstructure depending on the way the perlite ore was expanded. Expansion by NIR radiation results in particles having less open porosity.

### Examples

The following examples illustrate the invention in a non-limiting manner.

### First series of examples

In a first series of examples, dry compositions for leveling plasters were prepared by mixing calcium sulfate hemihydrate (HH), ground granulated blast furnace slag (GGBS), expanded perlite and additives (including cellulose ether and OPC). The water dosage (quantity of water, expressed in %, added to 100% of dry composition) was adapted in order to get the same consistency for all the examples.

In a comparative example C1, the expanded perlite was conventional perlite expanded in a gas-fired furnace. In the examples according to the invention, conventional perlite was replaced by perlite particles expanded by means of tungsten halogen lamps. Tungsten halogen lamps emit a broad and continuous spectrum from 300 nm to more than 2000 nm. The water uptake was 164% and the bulk density was 220 g/L. Two kinds of particles were used, showing different particle sizes. "Coarse" particles had a D50 of 0.324 mm and a D90 of 0.689 mm, measured by laser granulometry. "Fine" particles had a D50 of 0.059 mm and a D90 of 0.577 mm.

Table 1 below shows the compositions used, expressed in wt% relative to the weight of dry composition, as well as the flexural (F) and compression (C) strengths, expressed in MPa and measured according to EN 13963. Conventional perlite is called CP, while fine and coarse perlite according to the inventions are called respectively P1 and P2.

**[Table 1]**

| | HH | GGBS | CP | P1 | P2 | Additives | Water | F | C |
|---|---|---|---|---|---|---|---|---|---|
| C1 | 61.1 | 22.5 | 14.8 | - | - | 1.6 | 66 | 1.3 | 3.1 |
| 1 | 61.1 | 22.5 | - | - | 14.8 | 1.6 | 52 | 1.7 | 4.0 |
| 2 | 61.1 | 22.5 | - | 14.8 | - | 1.6 | 62 | 2.0 | 4.3 |
| 3 | 61.1 | 22.5 | - | 7.4 | 7.4 | 1.6 | 56 | 1.8 | 4.9 |
| 4 | 66.0 | 24.3 | - | - | 8.0 | 1.7 | 56 | 3.4 | 7.9 |
| 5 | 66.0 | 24.3 | - | 8.0 | - | 1.7 | 50 | 3.1 | 6.0 |
| 6 | 56.9 | 21.0 | - | 6.9 | 13.8 | 1.4 | 66 | 2.3 | 5.2 |

The plasters according to the invention show improved flexural and compressive strengths.

### Second series of examples

In a second series of examples, dry compositions for leveling plasters were prepared by mixing calcium sulfate hemihydrate (HH), anhydrite (AH), expanded perlite and additives (including accelerator, retarder, lime and cellulose ether). Three types of expanded perlite were used, as for the first series of example: convention perlite (CP) for the comparative example C2 and respectively "fine" (P1) and "coarse" (P2) expanded perlite for the inventive examples. Table 2 hereafter shows the compositions used, expressed in wt% relative to the weight of dry composition, as well as the flexural (F) and compression (C) strengths, expressed in MPa. As in the first series of examples, the water dosage was adapted in order to get the same consistency for all the examples.

**[Table 2]**

| | HH | AH | CP | P1 | P2 | Additives | Water | F | C |
|---|---|---|---|---|---|---|---|---|---|
| C2 | 76.7 | 19.7 | 2.2 | - | - | 1.4 | 68 | 0.63 | 1.11 |
| 7 | 76.7 | 19.7 | - | - | 2.2 | 1.4 | 64 | 0.89 | 1.34 |
| 8 | 76.7 | 19.7 | - | 2.2 | - | 1.4 | 66 | 0.79 | 1.66 |
| 9 | 76.7 | 19.7 | - | 1.1 | 1.1 | 1.4 | 66 | 0.83 | 1.34 |

As in the first series of examples, the plasters according to the invention showed improved flexural and compressive strengths.

## Claims

1. A dry gypsum plaster composition comprising 30-95wt% of calcium sulfate hemihydrate and 1-30wt% of expanded aluminosilicate particles that have been expanded by irradiating raw aluminosilicate particles by means of a radiation having at least one wavelength in the range of 800 to 2000 nm.

2. The gypsum plaster composition according to Claim 1, wherein the raw aluminosilicate particles contain combined water, especially in an amount of 1-20wt%.

3. The gypsum plaster composition according to any one of the preceding claims, wherein the chemical composition of aluminosilicate particles comprises at least 50wt%, especially at least 60wt%, of SiO₂+Al₂O₃.

4. The gypsum plaster composition according to any one of the preceding claims, wherein the expanded aluminosilicate particles are particles of expanded perlite or particles of expanded vermiculite.

5. The gypsum plaster composition according to any one of the preceding claims, wherein the expanded aluminosilicate particles have a water uptake of less than 200%.

6. The gypsum plaster composition according to any one of the preceding claims, wherein the radiation has a power density of at least 50 kW/m², preferably of at least 500 kW/m².

7. The gypsum plaster composition according to any one of the preceding claims, wherein the duration of irradiation for each aluminosilicate particle is 0.5 to 20 seconds.

8. The gypsum plaster composition according to any one of the preceding claims, wherein the bulk density of the expanded aluminosilicate particles is 40-500 g/L, preferably 50-350 g/L.

9. The gypsum plaster composition according to any one of the preceding claims, wherein the expanded aluminosilicate particles have a particle size distribution in volume such that the D50 is 0.010-0.500 mm and the D90 is 0.050-3.0 mm.

10. The gypsum plaster composition according to the preceding claim, wherein the D50 is 0.010-0.050 mm and the D90 is 0.050-0.100 mm, or wherein the D50 is 0.050-0.20 mm and the D90 is 0.100-2.0 mm.

11. The gypsum plaster composition as claimed in any one of the preceding claims, comprising 50-95wt% calcium sulfate hemihydrate, 1-30wt% expanded aluminosilicate particles and 0-50wt% fillers.

12. The plaster composition as claimed in any one of claims 1 to 10, comprising 30-90wt% calcium sulfate hemihydrate, 10-60wt% fillers and 1-15wt% expanded aluminosilicate particles.

13. The gypsum plaster composition as claimed in any one of the preceding claims, also comprising fillers, especially selected from calcite, dolomite, anhydrite and their mixtures.

14. The gypsum plaster composition as claimed in any one of the preceding claims, comprising one or more additive chosen from redispersable polymer powders, accelerators, retarders, rheological modifiers, air entrainers, pH modifiers, water-retention agents, pigments, stabilizers, thickeners, shrinkage-reducing agents, hydrophobic agents, plasticizers, and superplasticizers.

15. A method for obtaining a plaster coat comprising mixing the gypsum plaster composition of any one of the preceding claims with water to obtain a wet plaster, applying said wet plaster to a substrate, and letting the wet plaster set and dry.
